# DEMANDE DE BREVET EUROPEEN

(11) **EP 4 729 219 A1**
(43) Date de publication de la demande: **22.04.2026**
(21) Numéro de dépôt: 25179947.4
(22) Date de dépôt: 30.05.2025
(51) Int. Cl.: B23B 31/16, B23B 31/177

(54) **MANDRIN POUR MACHINE-OUTIL**

(30) Priorité: 17.10.2024 EP 24207298
(71) Demandeur: Axxen SA, 2822 Courroux (CH)
(72) Inventeur: Girardin, Dominique, 2900 Porrentruy (CH); Springinsfeld, Hervé, 68960 Illtal-Oberdorf (FR)
(74) Mandataire: P&TS SA (AG, Ltd.)

(57) **Abrégé**

L'invention concerne un mandrin (10) pour machine-outil, comportant un bâti (20) et au moins une pièce de serrage (30) comprenant un coulisseau (50) et un mors (40) fixé au coulisseau (50) par l'intermédiaire d'un élément de fixation (69) engagé dans une partie inférieure du mors (40) de manière à ce que sa partie supérieure soit dépourvue de tout élément de fixation. Le coulisseau (50) comprend un corps (56) agencé dans un logement (22) du bâti (20), et des moyens de positionnement (64a, 64b) pour positionner le mors (40) par rapport au coulisseau (50). Le mandrin (10) comporte en outre une pièce d'actionnement (70) reliée au coulisseau (50) de la pièce de serrage (30) et une pièce de liaison (100) reliée à la pièce d'actionnement (70) et destinée à être actionnée en translation afin que la pièce de serrage (30), sous l'action de la pièce d'actionnement (70), puisse se déplacer selon une direction radiale. Cela permet au mandrin (10) de passer d'une configuration dégagée, dans laquelle une pièce à usiner peut être montée dans le mandrin, à une configuration de serrage, dans laquelle la pièce à usiner est maintenue par le mors (40) de la pièce de serrage (30). Le mandrin (10) comporte en outre un corps de maintien (90) fixé au bâti (20) afin que le mors (40) puisse se déplacer au-dessus d'une face supérieure du corps de maintien (90) jusqu'à une zone d'appui (91) destinée à recevoir une pièce à usiner.

## Description

### Domaine technique

La présente invention concerne un mandrin pour machine-outil comprenant un encombrement réduit. Ce mandrin est particulièrement adapté pour les micro-centres d'usinage utilisés notamment dans le secteur de la micromécanique et de l'horlogerie.

### Etat de la technique

Il existe de nombreuses solutions dans l'art antérieur pour maintenir une pièce pendant son usinage. Parmi celles-ci, on connaît notamment des mandrins munis de plusieurs mors qui se déplacent radialement pour maintenir par ses côtés la pièce à usiner. Le déplacement radial des mors est généralement actionné par un piston agissant sur un tirant se déplaçant longitudinalement et perpendiculairement au plan de déplacement des mors. Des surfaces inclinées permettent de convertir ces déplacements longitudinaux en mouvements radiaux de coulisseaux sur lesquels sont fixés les mors dans un plan perpendiculaire à l'axe longitudinal du piston. Un résultat similaire est aussi obtenu par rotation d'une spirale concentrique, excentrique ou came qui aura aussi pour effet de déplacer les mors.

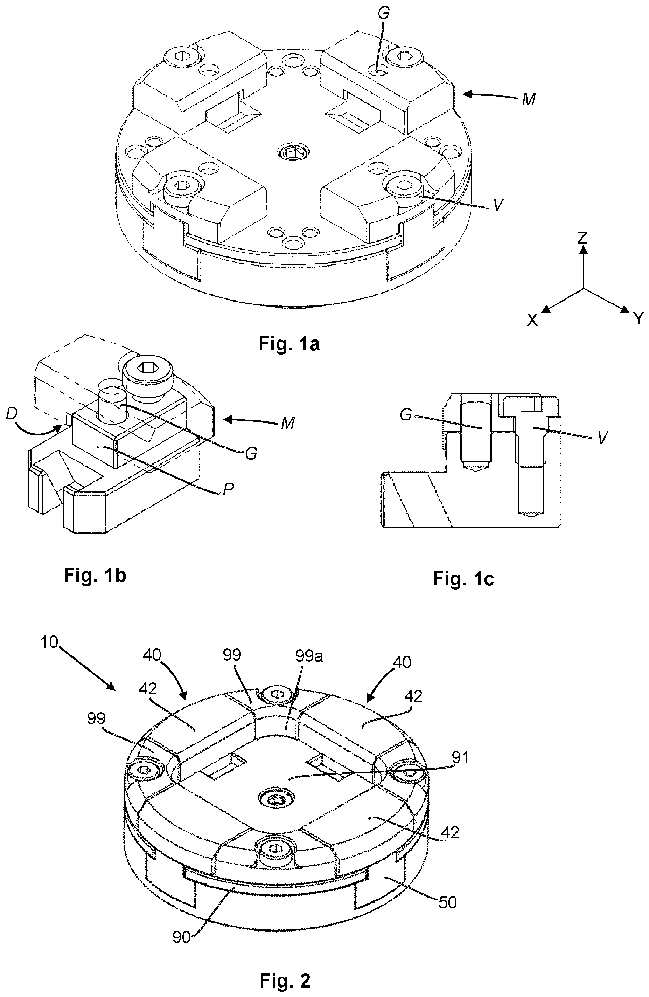

La fixation des mors sur les coulisseaux est en général réalisée par une goupille G et une vis *V* selon l'illustration qui en est faite par les figures 1a à 1c. Chaque mors *M* comporte sur une face inférieure une découpe *D* de forme rectangulaire ajustée sur une portée *P* du coulisseau de forme complémentaire afin d'assurer sa position en Y. Le mors comporte en outre un trou accueillant la goupille *G* afin d'empêcher la rotation du mors en Z et d'assurer sa position en X.

La face supérieure du mors comporte la tête de vis ainsi que l'ouverture du trou accueillant la goupille. Ce type de fixation présente plusieurs désavantages. L'épaisseur du mors est directement impactée puisque qu'il faut suffisamment de matière pour réaliser le lamage de la tête sur sa face supérieure ainsi que la découpe rectangulaire sur sa face inférieure. Or, l'encombrement du mandrin revête une importance capitale au vu du développement ces dernières années des micro-centres d'usinage 3 à 5 axes conçus pour être compact tout en permettant l'usinage de géométries complexes en une seule opération.

En outre, la face supérieure des mors, en particulier au niveau de la tête de vis, est sujet à l'accumulation de copeaux lors de l'usinage de la pièce requérant un nettoyage régulier du mandrin.

Par ailleurs, la précision du positionnement des mors par le type de fixation susvisé est perfectible ce qui peut avoir une répercussion négative sur le serrage de la pièce à usiner.

### Bref résumé de l'invention

Un but de la présente invention est par conséquent de proposer un mandrin pour machine-outil, comprenant un ou plusieurs mors dont la fixation au coulisseau respectif est exempte des limitations susvisées.

Un but de la présente invention est plus particulièrement de proposer un mandrin, en particulier pour un micro-centre d'usinage, dont le ou les mors présentent un encombrement réduit en hauteur.

Un autre but de la présente invention est de proposer un mandrin dont la fixation du mors ou de chaque mors au coulisseau respectif permet une meilleure précision dans le positionnement par rapport au coulisseau.

Un autre but de la présente invention est de proposer un mandrin adapté pour permettre l'usinage de la surface supérieure du mors ou de chaque mors afin qu'elle soit adaptée aux spécifications du clients pour permettre un serrage d'une pièce d'une géométrie particulière.

Un but additionnel de l'invention est de proposer un mandrin adapté pour éviter les zones d'accumulation de copeaux au cours de l'usinage de la pièce.

Ces buts, sont atteints, au moins partiellement, par un mandrin pour machine-outil, comportant un bâti et au moins une pièce de serrage comprenant un coulisseau et un mors fixé au coulisseau par l'intermédiaire d'un élément de fixation engagé dans une partie inférieure du mors de manière à ce que sa partie supérieure soit dépourvue de tout élément de fixation. Le coulisseau comprend un corps agencé dans un logement du bâti et des moyens de positionnement pour positionner le mors par rapport au coulisseau. Le mandrin comporte en outre une pièce d'actionnement reliée au coulisseau de la pièce de serrage et une pièce de liaison reliée à la pièce d'actionnement et destinée à être actionnée en translation afin que la pièce de serrage, sous l'action de la pièce d'actionnement, puisse se déplacer selon une direction radiale. Cela permet au mandrin de passer d'une configuration dite dégagée, dans laquelle une pièce à usiner peut être montée dans le mandrin, à une configuration dite de serrage, dans laquelle la pièce à usiner est maintenue par le mors de ladite au moins une pièce de serrage. Le mandrin comporte en outre un corps de maintien fixé au bâti afin que le mors puisse se déplacer au-dessus d'une face supérieure du corps de maintien jusqu'à une zone d'appui destinée à recevoir une pièce à usiner.

Selon une forme de réalisation, le coulisseau comporte deux moyens de réception alors que la face inférieure du mors comporte deux moyens de réception alignés par rapport aux deux moyens de réception du coulisseau. Les moyens de positionnement comprennent un premier moyen de positionnement agencé entre l'un des deux moyens de réception du mors et l'un des deux moyens de réception du coulisseau et un second moyen de positionnement agencé entre l'autre des deux moyens de réception du mors et l'autre des deux moyens de réception du coulisseau.

Selon une forme de réalisation, deux plots sont agencés sur une face supérieure du corps. Chaque plot comporte respectivement l'un et l'autre des deux moyens de réception du coulisseau.

Selon une forme de réalisation, le moyen de réception de chaque plot est sous la forme d'un trou cylindrique. Les deux moyens de réception du mors sont respectivement sous la forme d'un trou cylindrique et d'un trou dimensionné pour créer un jeu avec l'un des premier et second moyens de positionnement dans la direction de déplacement du coulisseau.

Selon une forme de réalisation, les premier et second moyens de positionnement sont chacun sous la forme d'une bille.

Selon une forme de réalisation, le mors comprend une partie de fixation, de préférence réalisée d'un seul tenant avec le corps du mors. La partie de fixation s'étend depuis la face inférieure dudit corps et est insérée dans un logement formé dans le corps du coulisseau. La partie de fixation comprend une ouverture pour le passage du moyen de fixation.

Selon une forme de réalisation, la partie de fixation du mors est montée en partie entre les deux plots du coulisseau.

Selon une forme de réalisation, le moyen de fixation est inséré longitudinalement dans le corps du coulisseau selon la direction de déplacement du coulisseau.

Selon une forme de réalisation, l'élément de fixation est une vis ou un élément de type excentrique.

Selon une forme de réalisation, le mandrin comporte N pièces de serrages comportant chacune un coulisseau, un mors ainsi qu'un élément de fixation fixant le mors au coulisseau. N est égal de préférence à 2, 3, 4, 6 ou 8.

Selon une forme de réalisation, la pièce d'actionnement est montée dans une ouverture centrale du bâti et comporte un nombre de bras d'actionnement correspondant au nombre de pièces de serrage. L'extrémité distale de chaque bras comporte un corps d'actionnement agencé dans une partie de connexion du coulisseau respectif. Le corps d'actionnement présente une face inclinée agencée pour coopérer avec une face inclinée correspondante de la partie de connexion du coulisseau afin que le déplacement axial de la pièce d'actionnement occasionne le déplacement des coulisseaux respectifs dans la direction radiale.

Selon une forme de réalisation, le mandrin comporte en outre un organe de précontrainte agencé entre la pièce d'actionnement et le corps de maintien. L'organe de précontrainte est adapté pour exercer une précontrainte sur la pièce d'actionnement. Cela permet de garantir un serrage passif de la pièce afin d'éviter un desserrage en cas de problème de l'organe de serrage machine qui peut être de type hydraulique, pneumatique ou mécanique.

Selon une forme de réalisation, le bâti comporte à sa périphérie des ilots pour la fixation du corps de maintien au bâti. Les ilots sont agencés pour former entre eux N logements. L'organe de précontrainte comporte un support et des éléments de précontrainte montés sur le support et agencés au niveau des ilots respectifs. Les éléments de précontrainte sont comprimés par le corps de maintien.

Selon une forme de réalisation, le support de l'organe de précontrainte comporte une partie centrale logée dans un logement central de la pièce d'actionnement. L'extrémité distale de chaque bras est reliée à l'un des éléments de précontrainte.

Selon une forme de réalisation, chaque extrémité distale de l'organe de précontrainte est agencée dans un logement réalisé dans chaque ilot. Chaque élément de précontrainte comprend plusieurs rondelles ressorts superposées et maintenues axialement par un axe traversant l'intégralité des rondelles et fixé à l'intérieur du logement.

Un autre aspect de l'invention porte sur une machine-outil comportant le mandrin selon l'une des formes de réalisation susvisées.

### Brève description des figures

Des exemples de mise en œuvre de l'invention sont indiqués dans la description illustrée par les figures annexées dans lesquelles :
- la figure 1a illustre une vue en perspective d'un mandrin comportant quatre mors selon l'état de la technique ;
- la figure 1b illustre une vue en perspective de l'assemblage entre un mors et un coulisseau de la figure 1a ;
- la figure 1c illustre une vue en coupe de la figure 1b selon l'axe longitudinal du coulisseau ;
- la figure 2 illustre une vue en perspective d'un mandrin pour machine-outil comprenant quatre coulisseaux et quatre mors, selon une forme de réalisation ;
- la figure 3 illustre une vue éclatée du mandrin de la figure 2 ;
- la figure 4 illustre une vue en perspective de dessus du bâti de la figure 3 ;
- la figure 5 illustre une vue en perspective de dessous du bâti de la figure 4 ;
- la figure 6 illustre une vue en perspective d'une pièce de serrage de la figure 3 avec des moyens de positionnement et de fixation du mors au coulisseau selon une forme de réalisation;
- la figure 7 illustre une vue en perspective de la pièce de serrage de la figure 6 avec une coupe selon l'axe longitudinal du coulisseau ;
- la figure 8 illustre une vue de face la figure 7 ;
- la figure 9 illustre une vue en perspective de dessus du coulisseau de la figure 6 ;
- la figure 10 illustre une vue en perspective de dessous du coulisseau de la figure 9 ;
- la figure 11 illustre une vue en perspective du dessous du mors de la figure 6 ;
- la figure 12 illustre une vue en perspective d'une pièce de serrage avec des moyens de positionnement et de fixation du mors au coulisseau selon une autre forme de réalisation;
- la figure 13 illustre une vue en perspective de la pièce de serrage de la figure 12 avec une coupe selon l'axe longitudinal du coulisseau ;
- la figure 14 illustre une vue en perspective d'une pièce de serrage de avec des moyens de positionnement et de fixation du mors au coulisseau selon une autre forme de réalisation;
- la figure 15 illustre une vue en perspective d'une pièce de serrage de avec des moyens de positionnement et de fixation du mors au coulisseau selon une autre forme de réalisation ;
- la figure 16 illustre une vue en perspective de la pièce de serrage de la figure 15 avec une coupe selon l'axe longitudinal du coulisseau ;
- la figure 17 illustre une vue de face la figure 16;
- la figure 18 illustre une vue similaire à la figure 17 avec un moyen de fixation du mors au coulisseau selon une autre forme de réalisation ;
- la figure 19 illustre une vue en perspective du moyen de fixation de la figure 18 ;
- la figure 20 illustre une vue en perspective de la pièce d'actionnement de la figure 3 ;
- la figure 21 illustre une vue en perspective du support de l'organe de précontrainte ;
- la figure 22 illustre une vue en perspective de dessus du corps de maintien de la figure 3 ;
- la figure 23 illustre une vue en perspective de dessous du corps de maintien de la figure 22 ;
- la figure 24 illustre une vue en perspective d'un mandrin pour machine-outil, selon une autre forme de réalisation, et
- la figure 25 illustre une vue similaire à la figure 24 avec une coupe partielle.

### Exemples de mode de réalisation de l'invention

Selon une première forme de réalisation et en référence notamment à la figure 2, le mandrin 10 comporte une partie périphérique dotée de quatre mors 40 et une partie centrale dotée d'une zone d'appui 91 destinée à recevoir une pièce à usiner. Les quatre mors 40 sont agencés pour pouvoir être déplacés par un dispositif d'actionnement selon une direction radiale afin que le mandrin 10 puisse passer d'une configuration dégagée dans laquelle la pièce à usiner peut être montée dans le mandrin contre la zone d'appui 91 à une configuration de serrage dans laquelle la pièce à usiner est maintenue par les mors 40.

La partie périphérique comporte en outre quatre appuis 99 agencés entre les mors 40 et destinés à permettre un positionnement correct de la pièce dans le mandrin 10. Plus particulièrement, chaque appui 99 comporte une surface incurvée 99a. La surface incurvée 99a de trois appuis 99 est identique alors que le quatrième appui présente une surface incurvée dont l'angle de courbure diffère afin que cette surface puisse réaliser la fonction de détrompeur pour un positionnement angulaire correct de la pièce. Il est aussi possible de réaliser un appui monobloc constitué par les appuis 99 et la zone d'appui 91.

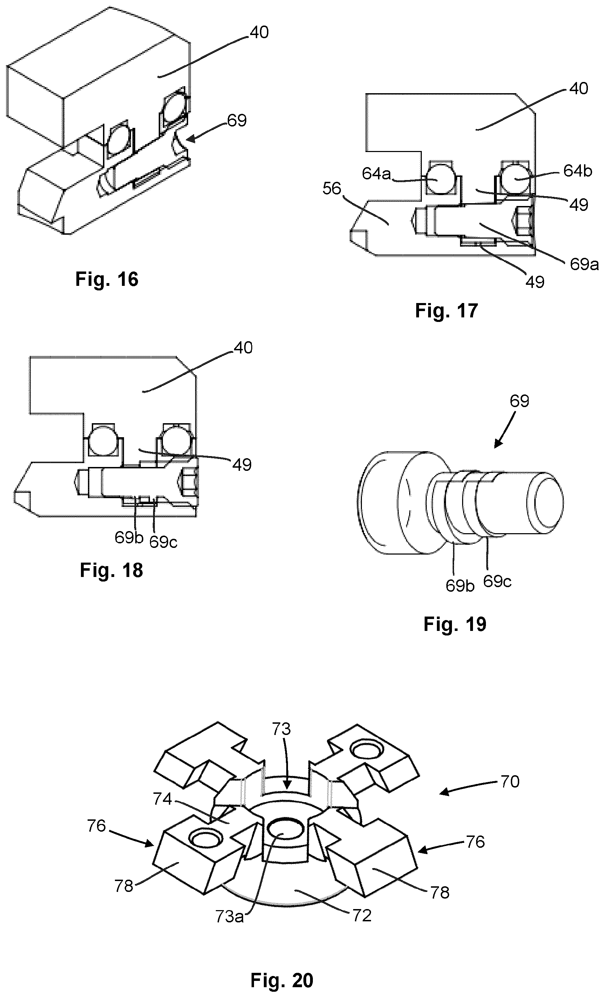

On relèvera que la face supérieure 42 des mors 40 est dénuée d'orifice et de tête de vis contrairement à la face supérieure des mors du mandrin de la figure 1a. Les faces supérieurs 42 permettent ainsi d'éviter l'accumulation de copeaux et un nettoyage régulier du mandrin lors des opérations d'usinage. Ces faces supérieurs 42 ont également l'avantage de pourvoir être personnalisées par l'utilisateur final, tant au niveau de l'esthétisme qu'au niveau fonctionnel, en particulier en usinant une partie de ces faces en fonction de la géométrie de la pièce à usiner afin d'assurer un serrage optimal. Il en va de même pour les appuis 99 qui sont aussi complètement fermés sur le dessus selon la forme de réalisation du mandrin illustré à la figure 19.

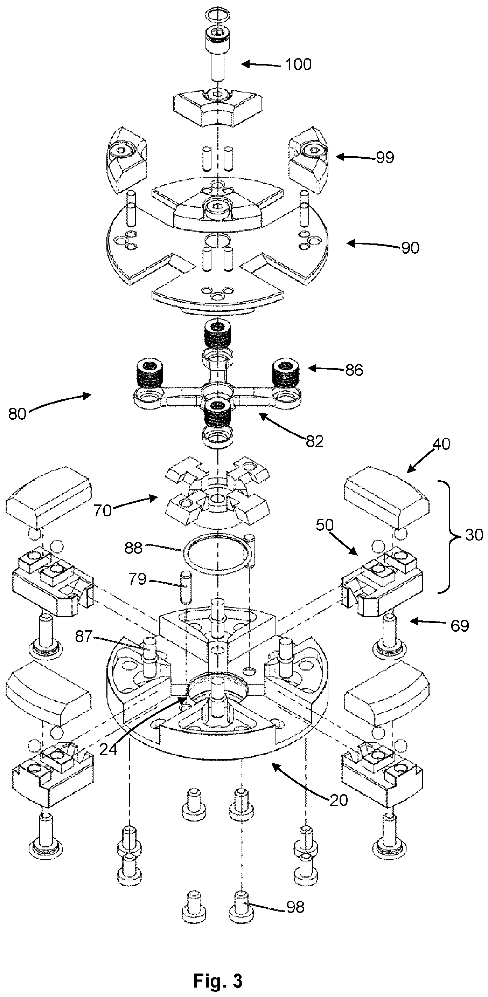

Au regard de la figure 3, le mandrin comporte un bâti 20, quatre pièces de serrage 30 comprenant chacune un mors 40 et un coulisseau 50, une pièce d'actionnement 70 agencée pour agir sur les coulisseaux, un organe de précontrainte 80 destiné à agir sur la pièce d'actionnement 70 ainsi qu'un corps de maintien 90 fixé au bâti 20 afin de maintenir notamment les coulisseaux 50 de chaque pièce de serrage 30 dans leur logement respectif. Le mandrin comporte en outre une pièce de liaison 100 traversant de part en part le mandrin et destinée à être fixée au tirant de la machine-outil. Dans les machines-outils moderne, le tirant peut être fixé à un piston hydraulique ou pneumatique de la machine. Selon une variante d'exécution, le mandrin peut intégrer un piston pneumatique ou hydraulique pour agir sur la pièce d'actionnement 70.

La pièce d'actionnement 70 et l'organe de précontraintes 80, dont les caractéristiques structurelles et fonctionnelles seront décrites ultérieurement, sont montées de manière coaxiale dans une ouverture centrale 24 du bâti 20. Un joint, par exemple un O-ring 88, est ajusté dans l'ouverture centrale 24 afin de garantir l'étanchéité entre la pièce d'actionnement 70 et le bâti 20.

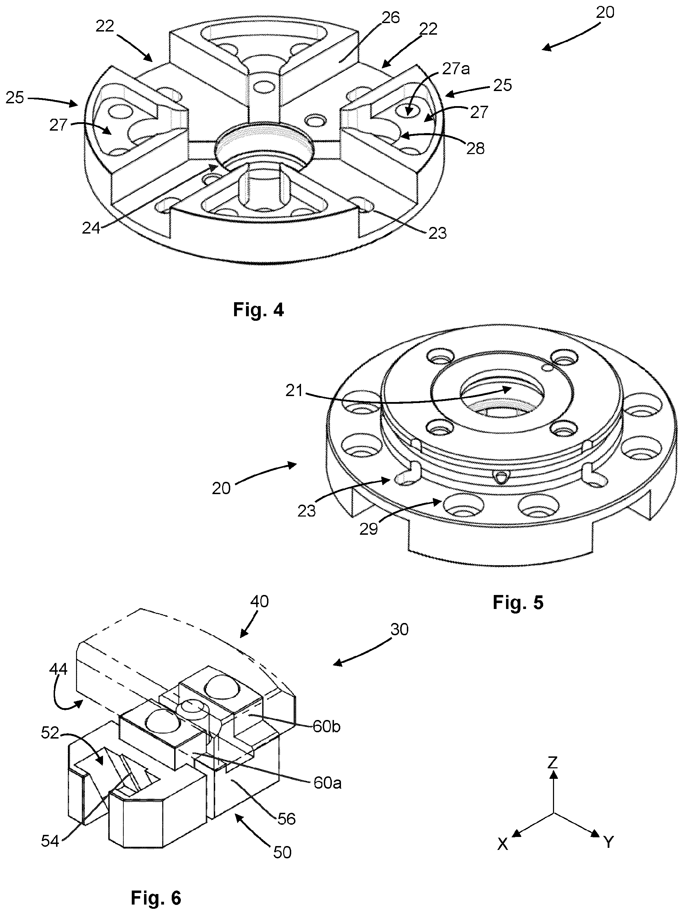

En référence à la figure 4, le bâti 20 présente à sa périphérie des ilots 25 pour la fixation du corps de maintien 90 au bâti. Les ilots 25 forment entre eux quatre logements 22 pour recevoir les coulisseaux respectifs des quatre pièces de serrage 30. Chaque ilot 25 comporte un évidemment 27 dans lequel est monté un élément de fixation 96 du corps de maintien 90 situé sur sa face inférieure tel qu'illustré à la figure 18. Plus précisément, l'évidement 27 de chaque ilot 25 comporte deux trous 27a traversant de part en part le bâti 20 alors que l'élément de fixation 96 correspondant du corps de maintien 90 comporte deux trous borgnes taraudés 97 pour assurer la fixation du corps de maintien 90 contre le bâti 20 au moyen de vis d'assemblage 98 (figure 3).

Au regard de la figure 5, le côté inférieur du bâti 20 comprend une partie 21 configurée pour être fixée dans une interface (non illustrée) destinée à être montée dans la broche de la machine-outil. Selon une variante, la partie 21 peut être adaptée pour être directement couplée à la broche de la machine-outil. La partie périphérique du mandrin comporte une pluralité de lamages 29 pour recevoir la tête des vis d'assemblage 98 (figure 3) lesquelles sont vissées dans les trous taraudés 97 respectifs des éléments de fixation 96 du corps de maintien 90.

Selon une forme de réalisation avantageuse et au regard des figures 6 à 11, chaque coulisseau 50 comporte un corps 56 comprenant deux côtés longitudinaux agencés contre une première et une seconde paroi 26 respectivement de deux ilots 26 afin que celles-ci puissent guider les coulisseaux en translation. Chaque coulisseau 50 comporte en outre deux plots 60a, 60b agencés sur une face supérieure du corps 56 ainsi qu'un trou 58 traversant de part en part le corps 56, selon une direction orthogonale au déplacement du coulisseau, avec une extrémité débouchant entre les deux plots 60a, 60b.

Un élément de fixation 69 du mors est monté dans le trou traversant 58 du coulisseau 50 et comporte une extrémité engagée fixement dans un élément de fixation complémentaire 48 situé sur une face inférieure 44 du mors 40. Chaque plot 60a, 60b comporte un moyen de réception 62 recevant une partie de l'un de deux moyens de positionnement 64a, 64b du mors alors que la face inférieure 44 de celui-ci comporte un premier et un second moyen de réception complémentaire 45, 46 recevant une partie opposée du moyen de positionnement respectif 64a, 64b. Ces moyens de positionnement permettent d'assurer un positionnement précis du mors 40 par rapport au coulisseau 50.

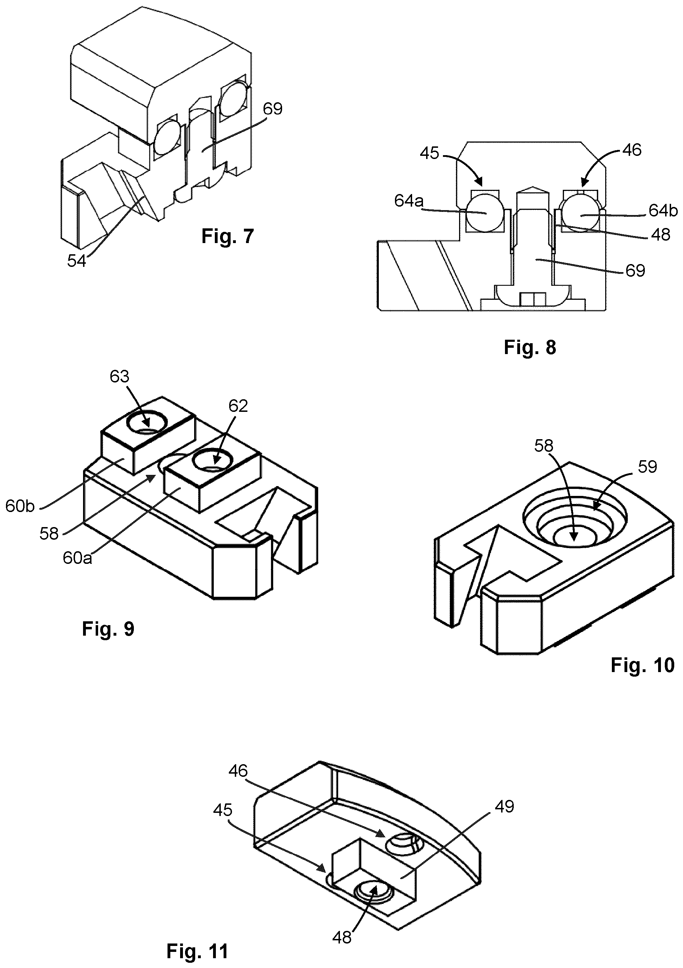

Selon la figure 11, la face inférieure du mors 40 est essentiellement plane et comporte un plot central 49 ayant la forme d'un parallélépipède rectangle et comprenant le second élément de fixation 48. Selon un mode de réalisation préférentiel, les éléments de fixation et de fixation complémentaire du mors sont de préférence sous la forme respectivement d'une vis 69 et d'un trou borgne taraudé 48 dans lequel l'extrémité de la vis est vissée. Le plot central 49 est situé entre les deux plots 60a, 60b du coulisseau afin que l'axe du trou borgne taraudé soit coaxial à l'axe du trou traversant 58. Une face inférieure du corps 56 du coulisseau 50 comporte un lamage 59 recevant la tête de vis.

On relèvera selon la figure 4 que le bâti 20 comporte un orifice 23 au niveau de chaque logement 22 des coulisseaux. Cet orifice permet d'accéder, par un outil idoine, à la tête des vis respectives 69 afin de pourvoir remplacer les mors sans devoirs démonter entièrement le mandrin.

Le mors 40 peut être fixé au coulisseau 50 par d'autres moyens de fixation, par exemple par un système de fixation à baïonnette ou par un système de coin.

Selon une forme de réalisation préférentielle, les moyens de positionnement sont sous la forme d'une première et d'une seconde bille 64a, 64b alors que le moyen de réception de chaque plot est sous la forme d'un trou cylindrique 62, 63 dans lequel est chassée la bille correspondante. Les moyens de réception complémentaires sont quant à eux sous la forme d'un logement cylindrique 45 avec un chanfrein incurvé afin d'épouser une surface annulaire de la première bille 60a et d'un logement 46 de forme légèrement oblongue afin d'accueillir en partie la seconde bille 64b.

Selon cet assemblage, la vis 69 assure le maintien du mors 40 en *Z,* la première bille 60a empêche toute translation et rotation en *X* et *Y* alors que le seconde bille 60b empêche toute rotation en *Z*. Les dimensions du logement 46 sont choisies afin d'avoir un jeu le long de l'axe *X* pour compenser les tolérances au niveau du trou borgne fileté.

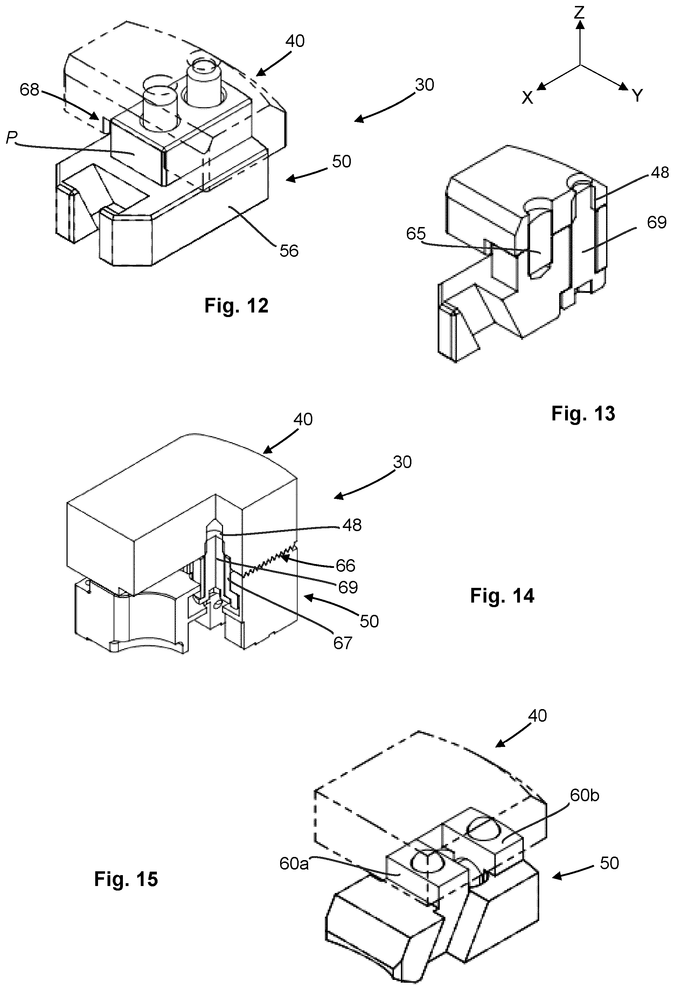

Selon une autre forme de réalisation et en référence aux figures 12 et 13, la pièce de serrage 30 comporte un coulisseau 50 doté d'un corps 56 et d'une portée *P* ayant la forme d'un parallélépipède rectangle s'étendant le long de la direction de déplacement du coulisseau. La face inférieure du mors 40 comporte une découpe rectangulaire 68 à l'intérieur de laquelle la portée *P* est ajustée. Le corps 56 et la portée *P* du coulisseau 50 sont traversés de part en part par un premier élément de fixation 69, de préférence une vis, dont une extrémité est fixement reçue à l'intérieur d'un second élément de fixation 48, de préférence un trou taraudé. La vis est orientée pour s'étendre le long d'un axe orthogonal au déplacement du coulisseau. La portée *P* comporte par ailleurs un trou recevant une partie d'une goupille 65, l'autre partie de la goupille étant ajustée dans un trou réalisé dans le mors.

Selon cet assemblage, la vis 69 assure le maintien du mors 40 en *Z,* la goupille 65 assure le positionnement du mors 40 en *X* alors que la découpe 68 et la portée *P* assure le positionnement du mors en *Y.*

Selon une autre forme de réalisation illustrée par la figure 14, la pièce de serrage 30 comporte un coulisseau 50 dont la face supérieure comporte une partie crantée 66 alors que la face inférieure du mors comporte une partie crantée complémentaire en prise avec la partie crantée 66 du coulisseau 50. Celui-ci est traversé de part en part par un premier élément de fixation 69, de préférence une vis, dont une extrémité est fixement reçue à l'intérieur d'un second élément de fixation 48, de préférence un trou borgne taraudé. La vis est également orientée pour s'étendre le long d'un axe orthogonal au déplacement du coulisseau. La vis 69 est montée dans un tasseau 67 ajusté dans un logement prévu à cet effet dans le coulisseau 50.

Selon cet assemblage, la vis 69 assure le maintien du mors 40 en *Z,* les parties crantées complémentaires respectivement du mors 40 et du coulisseau 50 assurent le positionnement du mors 40 en *X* alors que le tasseau 67 assure le positionnement du mors en *Y.*

Selon une autre forme de réalisation de la pièce de serrage 30, et comme cela est représenté aux figures 15 et 17, celle-ci reprend globalement la même configuration que celle décrite en référence à la figure 6. Toutefois, elle s'en distingue par la méthode de fixation du mors 40 sur le coulisseau 50. Dans cette variante, l'élément de fixation 69 est conçu de manière à traverser le corps 56 du coulisseau 50 selon un axe sensiblement parallèle à la direction de déplacement de ce dernier. Autrement dit, l'élément de fixation, par exemple une vis 69, est inséré longitudinalement, dans le corps du coulisseau. À cet effet, le mors 40 comprend une partie de fixation 49, de préférence réalisée d'un seul tenant avec le corps du mors, qui s'étend orthogonalement depuis la face inférieure de ce dernier pour s'insérer dans un logement approprié formé dans le corps du coulisseau 50. La partie de fixation 49 est partiellement située entre les deux plots 60a, 60b du coulisseau.

Cette partie de fixation 49 comporte une ouverture pour le passage de l'élément de fixation 69. Cette disposition contraste avec celle adoptée dans la configuration de la pièce de serrage de la figure 6, où le mors 40 est fixé au coulisseau 50 au moyen d'un élément de fixation s'étendant selon un axe orthogonal à la direction de déplacement du coulisseau. Ce changement d'orientation de l'élément de fixation 69 présente l'avantage de simplifier certaines opérations de montage et de maintenance.

En effet, le mandrin n'a plus besoin d'être démonté de la machine-outil pour remplacer les mors. Il suffit simplement de retirer l'élément de fixation 69, dont l'extrémité, conçue pour être manipulée à l'aide d'un outil, reste directement accessible sur le pourtour du mandrin, même lorsqu'il est monté sur la machine-outil. Dans cette configuration, le coulisseau de chaque pièce de serrage est maintenu dans son logement respectif 22 du bâti 20 par l'intermédiaire du corps de maintien 90. Il convient de noter que l'élément de fixation 69 comprend, comme illustré notamment à la figure 17, une section conique 69a agencée à l'intérieur de l'ouverture de la partie de fixation 49 du mors 40. Cette section conique 69a est orientée de manière à ce que son diamètre diminue en direction du centre du mandrin. L'ouverture de la partie de fixation 49 présente une forme complémentaire, conçue pour s'ajuster précisément au contour de la section conique 69a. Ainsi, lorsque l'élément de fixation est déplacé radialement vers le centre du mandrin à l'aide d'un outil, l'engagement progressif de la section conique dans l'ouverture génère un effort axial qui pousse le mors 40 dans une direction orthogonale au déplacement du coulisseau, ce qui a pour effet de le plaquer fermement contre le corps de maintien 90.

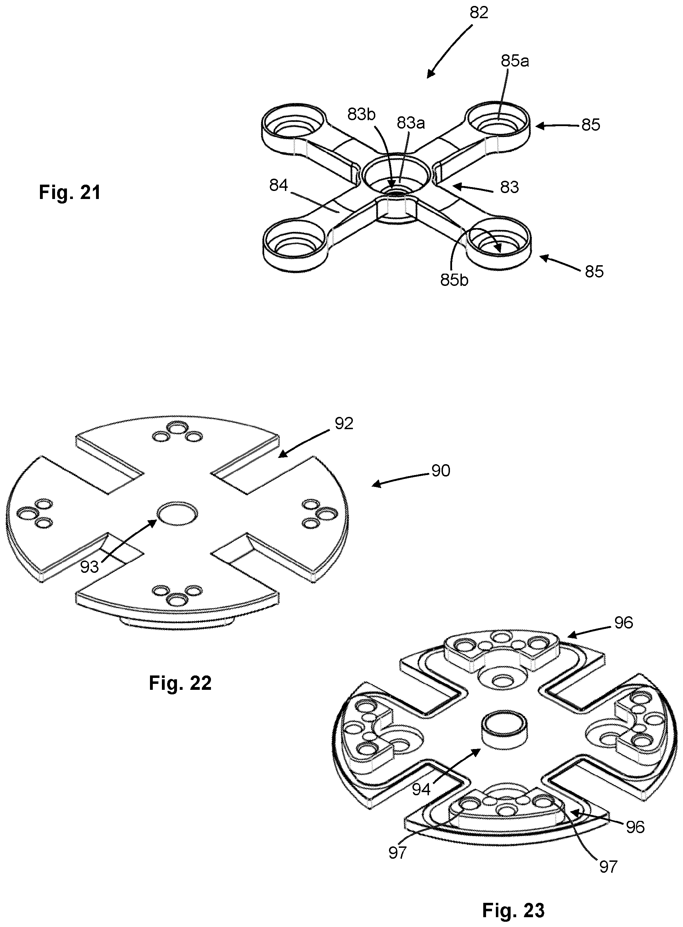

Selon une variante illustrée aux figures 18 et 19, la vis 69 peut être remplacée par un élément de fixation de type excentrique. Dans cette configuration, la partie de fixation du mors 40 est adaptée pour recevoir deux portions circulaires adjacentes, 69b et 69c, formant des projections radiales s'étendant uniquement sur une portion du pourtour de l'élément excentrique, par exemple sur 180°. Du fait de leur forme et de leur disposition excentrée, ces portions 69b et 69c exercent progressivement une force de serrage radiale dirigée vers l'extérieur, ce qui a pour effet de déplacer le mors dans une direction orthogonale au déplacement du coulisseau et de le plaquer fermement contre le corps de maintien 90.Le corps de maintien 90 illustré à la figure 22 comporte quatre découpes radiales 92 pour permettre le déplacement radial des pièces de serrage 30 au niveau de l'interface entre le coulisseau 50 et le mors 40 comprenant les moyens de positionnement et de fixation du mors.

En référence à la figure 20, la pièce d'actionnement 70 des coulisseaux 50 comporte un support cylindrique 72 disposé dans l'ouverture centrale 24 du bâti, quatre bras 74 disposés à 90° les uns par rapport aux autres et un corps d'actionnement 76 situé à une extrémité de chaque bras. Le corps d'actionnement 76 est disposé à l'intérieur d'une partie de connexion 52 du coulisseau correspondant (figure 6) avec une face inclinée 78 coopérant avec une face inclinée 54 complémentaire de la partie de connexion 52 du coulisseau de sorte à ce qu'un déplacement axial de la pièce d'actionnement 70 induise un déplacement radial des coulisseaux 50. Le support cylindrique comprend un logement central 73 doté d'une ouverture 73a traversant de part en part la pièce d'actionnement 70 pour le passage de la pièce de liaison 100 selon la description détaillée qui en sera fait ultérieurement.

En référence aux figures 3 et 21 et 25, l'organe de précontrainte 80 comporte un support 82 en forme de croix comportant quatre bras 84 et une partie centrale dotée d'un logement central 83. Cette partie centrale est logée dans le logement central 73 de la pièce d'actionnement 70. Le logement central 83 du support 82 comporte un fond annulaire 83a entourant une ouverture 83b traversée par la pièce de liaison. Un logement 85 est situé à l'extrémité distale de chaque bras 84. Ce logement 85 est adapté pour recevoir un élément de précontrainte 86 en appui contre la face inférieure du corps de maintien 90 comme illustré à la figure 20. Plus particulièrement, chaque logement 85 comporte un fond annulaire 85a entourant une ouverture 85b. Chaque élément de précontrainte 86 est constitué dans cet exemple de plusieurs rondelles ressorts superposées, de type Belleville, et maintenues axialement par un axe 87.

Selon la forme de réalisation illustrée, chaque logement 85 du support 82 de l'organe de précontrainte 80 est agencée dans un logement 28 réalisé dans chaque ilot 25 (figure 4) alors l'axe 87 traversant l'intégralité des rondelles et chassé à l'intérieur du logement 28. Chaque élément de précontrainte peut toutefois revêtir d'autres formes selon des variantes d'exécution, la fonction élastique pouvant être réalisé par un ressort de compression par exemple.

La face inférieure du corps de maintien 90 comporte un support central 94 de forme annulaire comme illustré à la figure 18.

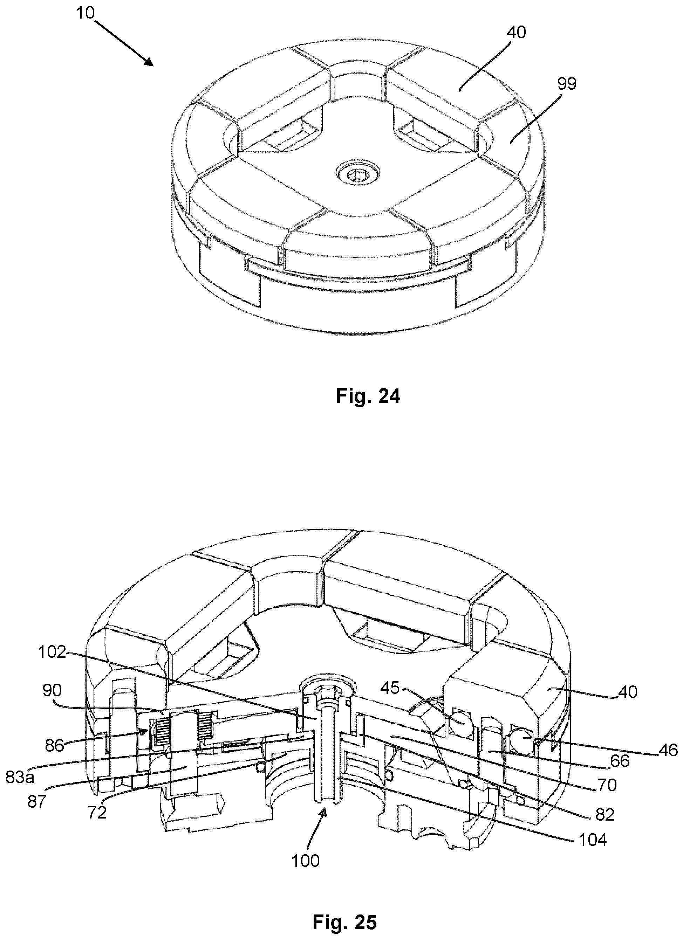

Selon les figures 24 et 25, qui représentent un mandrin selon une autre forme de réalisation dont les différences résident exclusivement dans la fixation des appuis 99, la pièce de liaison 100 comporte une tête de liaison 102 et une tige de liaison 104. La tête de liaison 102 est agencée à l'intérieur du support central 94 (figure 23) du corps de maintien 90 et repose sur le fond annulaire 83a de la partie centrale du support de l'organe de précontrainte. La tige de liaison 84 quant à elle traverse de part en part l'organe de précontrainte ainsi que la pièce d'actionnement 70 au travers de l'ouverture 83b du logement central du support 82 (figure 12) et de l'ouverture 73a de la pièce d'actionnement 70. L'extrémité libre de la tige de liaison peut ainsi être fixée au tirant de la machine-outil lors du montage du mandrin.

Le mandrin de la figure 24 est configuré pour que les mors 40 offrent une force de serrage passive pour, d'une part, maintenir une pièce serrée en cas de coupure électrique ou pneumatique de la machine-outil et, d'autre part, fournir une force de serrage supplémentaire à la force de serrage active. La force de serrage passive est générée par les éléments de précontraintes 86 qui sont montés afin d'être partiellement comprimés par la face inférieure du corps de maintien 90, par exemple à 75% de la compression maximale. La partie centrale du support 82 exerce dans cette configuration une force contre le support 72 de la pièce d'actionnement tendant à tirer les coulisseaux vers le centre.

Ce serrage passif a également l'avantage de pouvoir désolidariser le mandrin de la machine-outil tout en maintenant la pièce usinée par les mors. Cela a son importance, notamment pour l'usinage de pièces à géométrie complexe qui ne peuvent pas être usinées entièrement avec une seule machine. Le mandrin peut ainsi être monté dans différentes machines -outils sans perdre la position de référence de la pièce afin de réaliser différentes opérations d'usinage.

On comprendra que diverses modifications et/ou améliorations évidentes pour un homme du métier peuvent être apportées au mandrin qui fait l'objet de la description susvisée sans sortir du cadre de la présente invention définie par les revendications annexées. Par exemple, le nombre de mors du mandrin peut varier en fonction des besoins de l'utilisateur final et peux comporter plus de quatre mors, par exemple six ou huit, ou moins de quatre mors, par exemple trois, deux, voire un mors unique. Dans ce dernier cas, la pièce à usiner est placée contre un point d'appui fixe, souvent des butées ou un support afin de maintenir un équilibre lorsque le mors unique exerce une pression sur un seul côté de la pièce.

Par ailleurs, la construction du mandrin selon la description ci-dessus permet, en changeant la géométrie du coulisseau et de la pièce d'actionnement d'inverser le sens d'ouverture des coulisseaux. Cette modification permet le serrage intérieur et extérieur de la pièce à serrer, par exemple pour l'usinage de masses horlogères. Le dispositif d'actionnement peut aussi être ramené au mandrin en y intégrant un piston par exemple. Il est aussi possible de limiter la course d'ouverture, respectivement fermeture des mors par un système de butées pour définir des positions de serrage précises et éviter des déformations des pièces à parois fines.

### Liste de références

Mandrin 10
Bâti 20
   Partie filetée 21
   Logements 22
   Orifice 23
   Ouverture centrale 24
   Ilots 25
      Paroi 26
      Evidemment 27
      Trou 27a
      Logement 28
   Lamages 29
Pièce de serrage 30
   Mors 40
      Face supérieure 42
      Face inférieure 44
         Premier moyen de réception 45 (e.g. trou cylindrique)
         Second moyen de réception 46 (e.g. ouverture oblongue)
         Moyen de fixation complémentaire 48 (trou borgne taraudé)
         Plot central/partie de fixation 49
   Coulisseau 50
      Partie de connexion 52
         Face inclinée 54
      Corps 56
         Trou traversant 58
         Lamage 59
      Plot 60a, 60b
         Moyen de réception 62, 63
      Portée P
      Moyens de positionnement
         Billes 64a, 64b
         Goupille 65 (alternative)
         Partie crantée 66 (alternative)
         Tasseau 67 (alternative)
         Découpe 68 (alternative)
      Elément de fixation 69 (e.g. vis, excentrique)
         Section conique 69a
         Projection radiale 69b, 69c
Pièce d'actionnement 70
   Support 72
   Logement central 73
   Ouverture 73a
   Bras 74
   Corps d'actionnement 76
      Face inclinée 78
   Goupilles 79
Organe de précontrainte 80
   Support 82
   Logement central 83
      Fond 83a
      Ouverture 83b
   Bras 84
   Logement 85
      Fond 85a
      Ouverture 85b
   Eléments de précontrainte 86
   Axe 87
Joint 88
Corps de maintien 90
   Zone d'appui 91
   Découpes radiales 92
   Logement central 93
   Support central 94
   Eléments de fixation 96
      Trou borgne taraudé 97
Vis d'assemblage 98
Appuis 99
   Surface incurvée 99a
Pièce de liaison 100
   Tête de liaison 102
   Tige de liaison 104

## Revendications

1. Mandrin (10) pour machine-outil, comportant un bâti (20) et au moins une pièce de serrage (30) comprenant un coulisseau (50) et un mors (40) fixé au coulisseau (50) par l'intermédiaire d'un élément de fixation (69) engagé dans une partie inférieure du mors (40) de manière à ce que sa partie supérieure soit dépourvue de tout élément de fixation, le coulisseau (50) comprenant un corps (56) agencé dans un logement (22) du bâti (20), et des moyens de positionnement (64a, 64b) pour positionner le mors (40) par rapport au coulisseau (50), le mandrin (10) comportant en outre une pièce d'actionnement (70) reliée au coulisseau (50) de la pièce de serrage (30) et une pièce de liaison (100) reliée à la pièce d'actionnement (70) et destinée à être actionnée en translation pour que la pièce de serrage (30), sous l'action de la pièce d'actionnement (70), puisse se déplacer selon une direction radiale afin que le mandrin (10) puisse passer d'une configuration dite dégagée, dans laquelle une pièce à usiner peut être montée dans le mandrin, à une configuration dite de serrage, dans laquelle la pièce à usiner est maintenue par le mors (40) de ladite au moins une pièce de serrage (30), le mandrin (10) comportant en outre un corps de maintien (90) fixé au bâti (20) afin que le mors (40) puisse se déplacer au-dessus d'une face supérieure du corps de maintien (90) jusqu'à une zone d'appui (91) destinée à recevoir une pièce à usiner.

2. Mandrin (10) selon la revendication 1, dans lequel le coulisseau (50) comporte deux moyens de réception (62, 63), la face inférieure (44) du mors (40) comportant deux moyens de réception (45, 46) alignés par rapport aux deux moyens de réception (62, 63) du coulisseau (50), lesdits moyens de positionnement (64a, 64b) comprenant un premier moyen de positionnement (64a) agencé entre l'un des deux moyens de réception (45, 46) du mors et l'un des deux moyens de réception (62, 63) du coulisseau (50) et un second moyen de positionnement (64b) agencé entre l'autre des deux moyens de réception (45, 46) du mors et l'autre des deux moyens de réception (62, 63) du coulisseau (50).

3. Mandrin (10) selon la revendication précédente, dans lequel deux plots (60a, 60b) sont agencés sur une face supérieure du corps (56), chaque plot (60a, 60b) comportant respectivement l'un et l'autre des deux moyens de réception (62, 63) du coulisseau (50).

4. Mandrin (10) selon la revendication 2 ou 3, dans lequel les deux moyens de réception (62, 63) sont chacun sous la forme d'un trou cylindrique et en ce les deux moyens de réception (45, 46) du mors (40) sont respectivement sous la forme d'un trou cylindrique (45) et d'un trou (46) dimensionné pour créer un jeu avec l'un des premier et second moyens de positionnement (64a, 64b) dans la direction de déplacement du coulisseau (50).

5. Mandrin (10) selon l'une des revendications précédentes, dans lequel les premier et second moyens de positionnement sont chacun sous la forme d'une bille (64a, 64b).

6. Mandrin (10) selon l'une des revendications précédentes, dans lequel le mors (40) comprend une partie de fixation (49), de préférence réalisée d'un seul tenant avec le corps du mors, la partie de fixation (49) s'étendant depuis la face inférieure dudit corps et étant insérée dans un logement formé dans le corps (56) du coulisseau (50), ladite partie de fixation (49) comprenant une ouverture pour le passage de l'élément de fixation (69).

7. Mandrin (10) selon la revendication précédente, dans lequel l'élément de fixation (69) est inséré longitudinalement dans le corps (56) du coulisseau (50) selon la direction de déplacement du coulisseau (50).

8. Mandrin (10) selon la revendication 6 ou 7, dans lequel l'élément de fixation (69) est une vis ou un excentrique.

9. Mandrin (10) selon l'une des revendications précédentes, comportant N pièces de serrages (30) comprenant chacune un coulisseau (50), un mors (40), un élément de fixation (69) fixant le mors (40) au coulisseau (50), N étant égal de préférence à 2, 3, 4, 6 ou 8.

10. Mandrin (10) selon l'une des revendications précédentes, dans lequel la pièce d'actionnement (70) est montée dans une ouverture centrale (24) du bâti (20) et comporte un nombre de bras d'actionnement (74) correspondant au nombre de pièces de serrage (30), l'extrémité distale de chaque bras comportant un corps d'actionnement (76) agencé dans une partie de connexion (52) du coulisseau (50) respectif, le corps d'actionnement présentant une face inclinée (78) coopérant avec une face inclinée (54) correspondante de ladite partie de connexion (52) du coulisseau afin que le déplacement axial de la pièce d'actionnement (70) occasionne le déplacement des coulisseaux respectifs dans la direction radiale.

11. Mandrin (10) selon l'une des revendications précédentes, comportant en outre un organe de précontrainte (80) agencé entre la pièce d'actionnement (70) et le corps de maintien (90), l'organe de précontrainte (80) étant adapté pour exercer une précontraindre sur la pièce d'actionnement (70).

12. Mandrin (10) selon la revendication 11, dans lequel le bâti (20) comporte à sa périphérie des ilots (25) pour la fixation du corps de maintien (90) au bâti (20), les ilots formant entre eux plusieurs logements (22), l'organe de précontrainte (80) comportant un support (82) et des éléments de précontrainte (84) montés sur le support (84) et agencés au niveau des ilots respectifs (85), les éléments de précontrainte (84) étant comprimés par le corps de maintien (80).

13. Mandrin (10) selon la revendication précédente, dans lequel le support (82) de l'organe de précontrainte (40) comporte une partie centrale logée dans un logement central (73) de la pièce d'actionnement (70), l'extrémité distale de chaque bras étant reliée à l'un des éléments de précontrainte (84).

14. Mandrin (10) selon la revendication précédente, dans lequel chaque extrémité distale est agencée dans un logement (29) réalisé dans chaque ilot (25), chaque élément de précontrainte (84) comprenant plusieurs rondelles ressorts superposées et maintenues axialement par un axe (86) traversant l'intégralité des rondelles et fixé à l'intérieur du logement (29).

15. Machine-outil comportant le mandrin selon l'une des revendications précédentes.
